**Europäisches Patentamt**

**European Patent Office**

**Office européen des brevets**

(19)

(11) Veröffentlichungsnummer: **0 341 345 B1**

# EUROPÄISCHE PATENTSCHRIFT

(12)

(45) Veröffentlichungstag der Patentschrift: **09.09.92**

(51) Int. Cl.⁵: **B01D 35/04**

(21) Anmeldenummer: **88121268.2**

(22) Anmeldetag: **20.12.88**

(54) **Ventil mit eingebautem Filtereinsatz.**

(30) Priorität: **11.05.88 IT 2053588**

(43) Veröffentlichungstag der Anmeldung:
**15.11.89 Patentblatt 89/46**

(45) Bekanntmachung des Hinweises auf die
Patenterteilung:
**09.09.92 Patentblatt 92/37**

(84) Benannte Vertragsstaaten:
**AT BE CH DE ES FR GB GR IT LI LU NL SE**

(56) Entgegenhaltungen:
DE-C- 830 271          FR-A- 2 527 935
FR-A- 2 527 935       US-A- 1 992 472
US-A- 2 661 096       US-A- 2 661 096
US-A- 3 735 874

(73) Patentinhaber: **FIMCIM S.r.l.**
**Via Turati, 29**
**I-20121 Milano(IT)**

(72) Erfinder: **Cimberio, Renzo**
**Via Torchio, 56**
**I-28017 S. Maurizio d'Opaglio (Novara)(IT)**

(74) Vertreter: **de Dominicis, Silvia Giovanna et al**
**de Dominicis & Mayer Piazzale Marengo 6**
**I-20121 Milano(IT)**

## Beschreibung

Die vorliegende Erfindung bezieht sich auf ein Kugelventil mit eingebautem Filtereinsatz.

Mit der Bezeichnung "Kugelventil" werden um es kurz zu sagen in diesem Zusammenhang die verschiedenen Ausfuehrungen von Kugelventilen und - haehnen verstanden, die z. B. in Haus- und industriellen Wasserverteilungsanlagen, z. B. in Wasseranlagen, Sanitaets- und Heizungsanlagen, sowie in Gasverteilungsanlagen usw. eingesetzt werden.

In solchen Anlagen ist die Notwendigkeit, das gefuehrte Stromungsmittel zu filtrieren bekannt, um die einwandfreie Arbeitsweise der in den genannten Anlagen eingeschalteten Apparaten zu gewaehrleisten.

Bei Wasserverteilungsanlage, bei welchen das Wasser im allgemeinen zunehmende Haertewerte aufweist, fuehrt das Wasser sehr abschleifende sandartige Rueckstaende mit sich, die z. B. die Dichtigkeit der bekannten, kostspieligen und immer mehr verbreiteten Einhebel-Haehne, das heisst Haehne mit keramischen Steuerscheiben, schaedigen und deshalb die Ersetzung der genannten keramischen Scheiben erfordern.

Bei den Gasverteilungsanlagen ist eine Filtrierung des Gases deshalb ebenfalls erforderlich, um zu vermeiden, dass eventuelle Unreinheiten die tadellose Arbeitsweise, z. B. der empfindlichen elektronischen Steuereinrichtung und - apparaturen von Brennern und dergleichen beeintraechtigen.

Bei den Anlagen dieser Gattung ist es zur Zeit bekannt, die erforderliche Filtrierung des gefuehrten Stroemungsmittels durch die Verwendung eines einen patronenartigen Filtereinsatz aufnehmenden Filtrierungsverbindungsstueckes durchzufuehren. Der Verbindungsstueckkoerper weist eine im wesentlichen Y-artige Gestaltung mit einem das Gasstroemungsmittel fuehrenden geradlinigen Teil auf, in dem eine Kammer erhalten ist, die vom Stroemungsmittel zwangslaeufig durchflossen ist, einen patronenartigen Filtereinsatz aufnimmt und eine in Bezug auf den genannten das Stroemungsmittel fuehrenden geradlinigen Teil schraegverlaufende Achse aufweist, wobei der Boden dieser den Filtereinsatz aufnehmenden Kammer durch eine loesbare Gewindekappe gebildet ist, um die Saeuberung des Filtereinsatzes und die Entfernung der in demselben aufgefangenen Rueckstaende zu ermoeglichen. Bei diesen bekannten Filtrierungsverbindungsstuecken weist der Filtereinsatz die Gestaltung eines zylindrischen Koerbchens auf, bei dem das Stroemungsmittel durch eine endseitige Stirnoeffnung des Filtereinsatzes in denselben eintritt und verlaesst es dann umfaenglich den Filtereinsatz, indem das Stroemungsmittel durch den perforierten Filtereinsatzmantel hinfliesst, wobei die im Filtereinsatz zurueckgebliebenen Rueckstaende sich im Bereich der endseitigen unteren offenen Stirnoeffnung des genannten Filtereinsatzes bzw. in der genannten loesbaren Gewindekappe absetzen.

Obwohl diese Filtrierungsverbindungsstuecke ihre Filtrierungsfunktion tadellos durchfuehren, weisen dieselben in der Praxis mehrere nachfolgend erwaehnte Nachteile und Unzulaenglichkeiten auf.

Vor allem handelt es sich um Filtrierungsverbindungsstuecke, deren Verbindungsstueckkoerper eine komplizierte und kostspielige Herstellung verlangt. Das Einbauen des bekannten Filtrierungsverbindungsstuecks, das heisst des Filtereinsatzes desselben, in einem Ventil wuerde zwangslaeufig nicht nur zu einer betraechtlichen Zunahme des gesamten Raumbedarfs desselben sondern auch zu Gesamtkosten fuehren, die fuer ein solches zusammengesetztes Kugelventil unverhaeltnismaessig gross sind, weil diese in Betracht gezogenen Kugelventile, wie an sich bekannt heutzutage Ventile sind, die auf eine stark automatisierte Weise und in grossen Mengen, das heisst mit einer geringen Verdienstspanne herstellbar sind. Das bekannte Filtrierungsverbindungsstueck wird deshalb zur Zeit zusammen mit einem das Stroemungsmittel abstellenden bzw. absperrenden Bauteil verwendet, um die Saeuberung des Filtereinsatzes durchfuehren zu koennen. Diese Verbindung verlangt ihrerseits die Verwendung eines weiteren zwischenliegenden Verbindungsstuecks, was zu einer zusaetzlichen Zunahme des gesamten Aufwandes fuehrt. Die dadurch entstandene Gruppe Filtrierungsverbindungsstueck - zwischenliegendes Verbindungsstueck - Kugelventil verlangt ferner einen betraechtlichen Raumbedarf. Die Verbindung dieser Bauteile verlangt auch die Durchfuehrung von zusaetzlichen Dichtichtigkeitsverbindungen, die manuell durchzufuehren sind und indirekterweise eine spezifische Verlaengerung des Einsatzes eines Bedienungsmannes verlangt. Es ist ferner hervorzuheben, dass die bekannten Y-foermigen Filtrierungsverbindungsstuecke eine vorbestimmte Montageanordnung bzw. eine vorbestimmte Durchflussrichtung des Stroemungsmittels aufweisen bzw. einhalten sollen.

Durch die US-A-2 661 096 wurde ein einen patronenartigen Filtereinsatz enthaltendes T-foermiges Verbindungsstueck bekannt, bei dem die den Filtereinsatz aufnehmende Filtrierungskammer mit einem als Gewindekappe ausgefuehrten loesbaren Kammerboden versehen ist. Der Filtereinsatz weist in seiner Umfangsflaeche eine Einlaßoeffnung fuer den Eintritt des zu filtrierenden Stroemungsmittels auf.

Bei diesem Verbindungsstueck weist ferner das einlaßseitige Anschlußstueck einen in die Filtrierungskammer vorspringende sich verjuengenden rohrfoermigen Flansch auf, der die Einlaßoeffnung des Filtereinsatzes zur Halterung des letzteren aufnimmt.

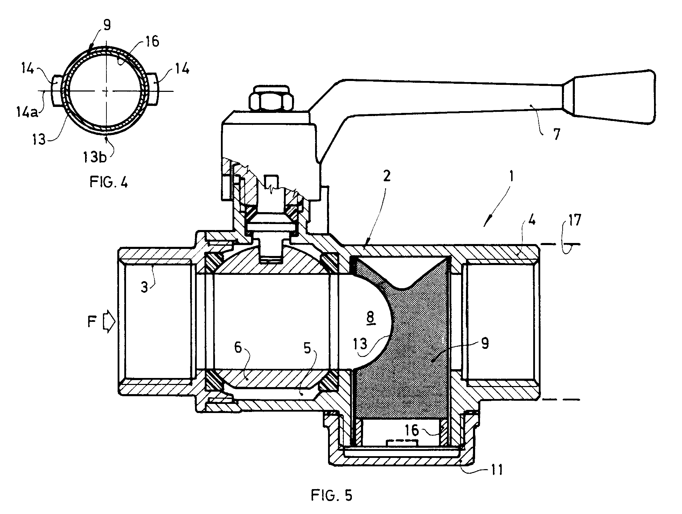

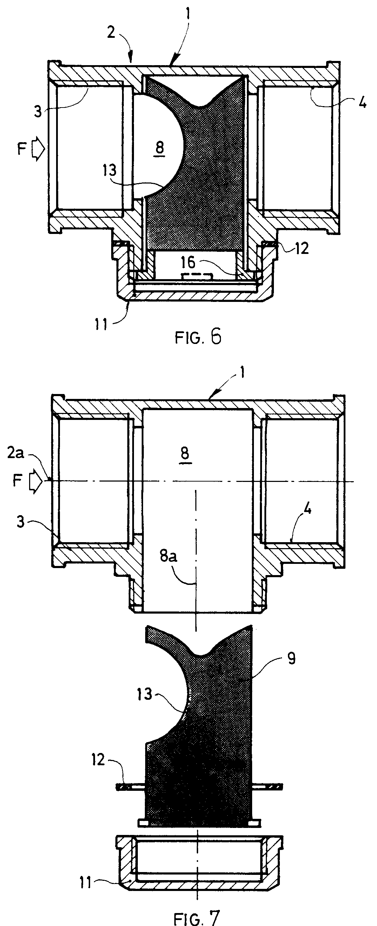

Bei der Ausfuehrungsform der Figuren 5 und 6 weist der Filtereinsatz eine laengliche am unteren Ende offene Einlaßoeffnung auf. Der nach innen vorspringende Flansch erstreckt sich ebenfalls mantelartig nach unten und nimmt die Einlaßoeffnung des Filtereinsatzes auf.

Nachteilig ist bei diesem Verbindungsstueck, dass

- beim Abnehmen der Gewindekappe der Filtrierungskammer der Filtereinsatz in der Filtrierungskammer fest haengenbleibt, und dass
- der Filtereinsatz in die Filtrierungskammer in einer einzigen Montagelage haltbar ist.

Daraus folgt, dass bei jedem Reinigungsvorgang der Filtereinsatz jedesmal erst abzuhaengen und nach der Reinigung wieder in die Filtrierungskammer einzuhaengen ist.

Das Einbauen des Verbindungsstuecks bestimmt die Flußrichtung. Bei einer Umkehrung der Flußrichtung muss zwangslaeufig das Verbindungsstueck abmontiert und nach einer Drehung von 180° wieder montiert werden.

Dem FR-A-2 527 935 ist ein Kugelventil mit eingebautem Filtereinsatz entnehmbar, wobei der Filtereinsatz sich konisch in Flußrichtung erstreckt. Diese Bauweise verlangt einen erheblichen Platzbedarf. Wuerde man bei diesem Kugelventil eine Filtrierungskammer bzw. einen Filtereinsatz nach US-A-2 261 096 einbauen, so wuerde man die gleichen oben erwaehnten Nachteile feststellen.

Vorliegender Erfindung liegt die Aufgabe zugrunde, ein Kugelventil mit zugeordnetem Filter herzustellen, das in der Lage ist, die Nachteile und Unzulaenglichkeiten der bekannten Technik zu vermeiden, einen kleinen Raumbedarf verlangt und mit einem aeusserst gedrungenen Herstellungsaufwand herstellbar ist, wobei der vorgeschlagene Filtereinsatz ebenfalls in einem T-foermigen Filtrierungsverbindungsstueck aufnehmbar ist, und wobei das Kugelventil und das Filtrierungsverbindungsstueck nach Belieben in der jeweiligen Anlage deshalb montiert werden kann, weil erst nach der Montage durch entsprechende Anordnung des Filtereinsatzes im Kugelventil bzw. im Filtrierungsverbindungsstueck von der Stroemungsmittelrichtung Rechnung getragen wird.

Es liegt noch im Rahmen der angegebenen Aufgabe, Kugelventile und Verbindungsstuecke mit eingebautem Filtereinsatz herzustellen, die eine leichte Handhabung und Saeuberung ermoeglichen.

Die der vorliegenden Erfindung zugrunde gelegte Aufgabe wird bei einem Kugelventil mit den Merkmalen des Anspruchs 1 und bei einem Verbindungsstueck mit eingebautem Filtereinsatz mit den Merkmalen des Anspruchs 2 geloest.

Eine weitere Ausgestaltung der Erfindung ist dem Unteranspruch 3 entnehmbar.

Mit den erfindungsgemaessen Kugelventilen und Verbindungsstuecken werden zahlreiche Vorteile erreicht, von denen die wichtigsten nachfolgend erwaehnt werden.

Vor allem ist es nun moeglich, Kugelventile mit eingebautem Filtereinsatz herzustellen, die mit einer einfachen und raschen Herstelung des Ventilkoerpers herstellbar sind, so dass diese Kugelventile ebenfalls in Anbetracht der Herstellungskosten vorteilhaft und indirekterweise konkurrenzfaehig sind. Der Ventilkoerper weist vorteilhafterweise eine gedrungene bzw. einen kleinen Raumbedarf verlangende Bauweise auf, so dass der Ventilkoerper auch im Falle von engen Einbauumstaenden, wie dieselben oft in Hausanlagen vorkommen, in der Wasser- bzw. Gasanlage montiert werden kann. Das vorgeschlagene Kugelventil laesst ferner vorteilhafterweise eine einfache und schnelle Montage zu, ohne zusaetzliche Dichtigkeitsverbindungen zu erfordern, wofuer die Arbeit des Bedienungsmannes ganz aehnlich der Arbeit ist, die zur Installierung eines ueblichen Kugelventils erforderlich ist.

Ein weiterer Vorteil der Kugelventile mit eingebautem Filtereinsatz ist darin zu sehen, dass derselbe Filtereinsatz je nach der Drehung desselben sowohl in Ventilen mit in Stroemungsmittelrichtung in Bezug auf den Verschlusskoerper vorgeschalteter Filtrierungskammer als auch bei Ventilen mit in Stroemungsmittelrichtung in bezug auf den Verschlusskoerper nachgeschalteter Filtrierungskammer einsetzbar ist. Dies ermoeglicht die Herstellung des Filtereinsatzes zu normieren und deshalb die Lagerhaltung desselben zu vereinfachen. Der Filtereinsatz fuer die Ventile kann ferner vorteilhafterweise ebenfalls als Filtereinsatz fuer die Filtrierungsverbindungsstuecke eingesetzt werden, die nun die gleiche T-Gestaltung der bekannten T-Verbindungsstuecke aufweisen koennen. Wie bei den bekannten T-foermigen Verbindungsstuecken steht auch bei den erfindungsgemaessen Filtrierungsverbindungsstuecken dem durchfliessenden Stroemungsmittel die ganze Innenlichtweite des Verbindungsstueckes zu Verfuegung, so dass die zu der Einfuegung des Filtereinsatzes zurueckzufuehrenden Reibungs-bzw. Lastverluste ganz unerheblich sind. Es ist ferner zu betonen, dass die erfindungsgemaessen Filtrierungsverbindungsstuecke ungeachtet der Stroemungsmittelrichtung montiert werden koennen, weil von der Stroemungsmittelrichtung einfach bei der Einfuehrung des Filtereinsatzes, und zwar bei Drehung desselben in der einen bzw. in der anderen Richtung, das heisst mit zur Stroemungsmittelrichtung zugewandten Einlassoeffnung Rechnung getragen wird.

Noch ein weiterer genereller Vorteil der Kugelventile mit eingebautem Filtereinsatz bzw. der erfindungsgemaessen Filtrierungsverbindungsstuecke ist in der kleinen Anzahl der vorgesehenen Bestandteile zu sehen, sowie in der Auswechselbarkeit derselben fuer mehrere Typen von Kugelventilen bzw. Filtrierungsverbindungsstuecken. Mit den vorgeschlagenen Ventilen und Filtrierungsverbindungsstuecken hat man ferner den zusaetzlichen Vorteil, diese Ventile bzw.

Filtrierungsverbindungsstuecke gleichgueltig zur Fuehrung von Wasser, Gas oder eines anderen Stroemungsmittels, z. B. Oel, wie z. B. im Fall von Ventilen fuer Oelheizkoerper zu verwenden, wobei jeweils der Filtereinsatz mit den jeweiligen Maschen- bzw. Perforierungsmerkmalen eingesetzt wird, die fuer das in Betracht gezogene Stroemungsmittel von den spezifischen Normen vorgesehen sind, wobei das Ventil bzw. das Filtrierungsverbindungsstueck als solches unveraendert bleibt.

Weitere Merkmale, Vorteile und Einzelheiten der erfindungsgemaessen Kugelventile bzw. Filtrierungsverbindungsstuecke mit eingebautem Filtereinsatz sind ferner der nachfolgenden Beschreibung entnehmbar, die sich auf die Zeichnungen bezieht, die beispielsweisezwei Ausfuehrungsformen der erfindungsgemaessen Kugelventile und ein Filtrierungsverbindungsstueck darstellen. Es zeigen schematisch:

Fig. 1 einen mittleren Laengsschnitt durch ein erfindungsgemaesses Kugelventil mit eingebautem Filtereinsatz, wobei der Kugelverschlusskoerper in der Oeffnungsstellung dargestellt ist;

Fig. 2 einen Laengsschnitt aehnlich wie in Fig. 1, jedoch mit den Filtrierungsbestandteilen in auseinandergezogener Darstellung und mit Verschlusskoerper in der Schliessstellung;

Fig. 3 eine perspektivische Ansicht auf einen erfindungsgemaessen patronenartigen Filtereinsatz;

Fig. 4 einen Querschnitt des erfindungsgemaessen Filtereinsatzes entlang der Linie IV-IV von Fig. 3;

Fig. 5 einen mittleren Laengsschnitt aehnlich wie in Fig. 1, jedoch mit in bezug auf den Verschlusskoerper demselben nachgeschalteter Filtrierungskammer;

Fig. 6 einen mittleren Laengsschnitt durch ein erfindungsgemaesses Filtrierungsverbindungstueck; und

Fig. 7 einen Laengsschnitt aehnlich wie in Fig. 6, mit Filtrierungsbestandteilen in auseinandergezogener Darstellung.

Bei den verschiedenen oben erwaehnten Figuren weisen gleiche Teile gleiche Bezugzeichen auf.

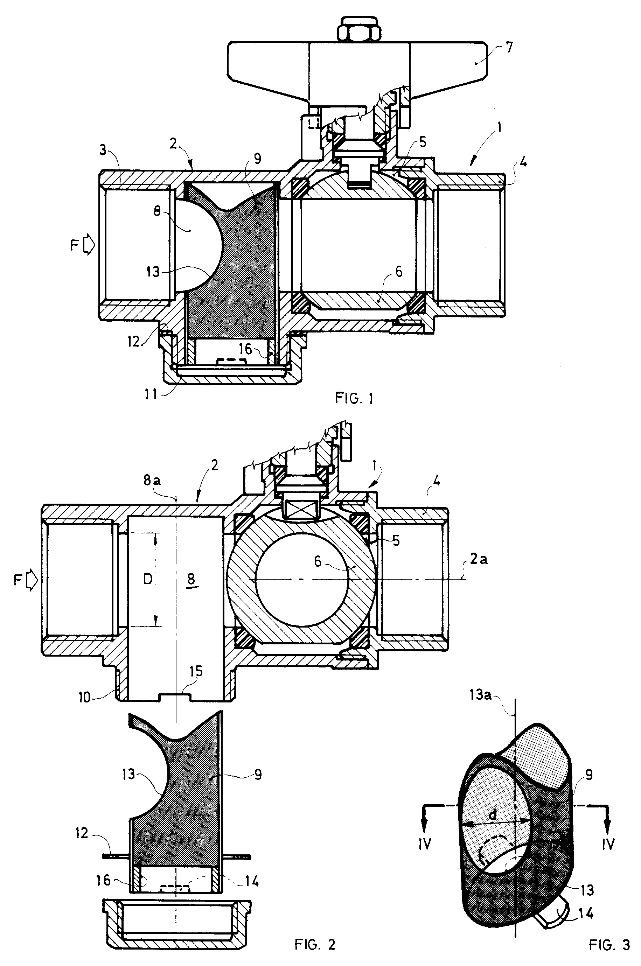

Das erfindungsgemaesse Kugelventil wird in seiner Gesamtheit mit 1 bezeichnet. Das gleiche weist einen Ventilkoerper 2 mit endseitigen Anschlussstuecken 3 und 4 und eine zwischenliegende Kammer 5 zur Aufnahme eines Verschlusskoerpers 6 auf, wobei der letztere als Kugel ausgefuehrt ist und durch einen aeusseren Betaetigungsgriff 7 steuerbar ist. Erfindungsgemaess ist im Ventilkoerper 2 zwischen einem endseitigen Anschlussstueck, und zwar dem Anschlussstueck 3 in Fig. 1 und dem Anschlussstueck 4 in Fig. 5, und der den Verschlusskoerper 6 aufnehmenden Kammer 5 eine im wesentlichen zylinderfoermige Filtrierungskammer 8 erhalten, in der ein Filtereinsatz bzw. Filter 9 aufgenommen ist, der im dargestellten Beispiel als ein patronenartiger Filtereinsatz dargestellt ist. Wie den Figuren entnehmbar, weist die Filtrierungskammer 8 einen in bezug auf die axiale Achse 2a des Ventilkoerpers 2 rechtwinklige Achse 8a sowie, an ihrem unteren Ende ein Aussengewinde 10 auf zur loesbaren Aufnahme eines Bodenstuecks 11, das im dargestellten Beispiel als Gewindekappe 11 ausgefuehrt ist. Mit 12 ist eine zwischengelegte ringfoermige Dichtung bezeichnet. Um den freien Zutritt in den zu saeubernden Filtereinsatz 9 zu ermoeglichen, weist der Filtereinsatz 9 auf seiner zu der Stroemungsmittelrichtung zugewandten Seite eine Oeffnung 13 auf, die im dargestellten Beispiel eine kreisfoermige Form aufweist. Der Durchmesser d dieser Oeffnung 13 ist vorzugsweise im wesentlichen gleich wie der Durchmesser D der inneren Lichtweite des Ventilkoerpers 2 gewaehlt, so dass dem Durchtritt des Stroemungsmittels die vollstaendige Innenlichtweite des Ventilkoerpers zur Verfuegung steht. Um die genaue Positionierung des Filtereinsatzes in der Filtrierungskammer 8 zu gewaehrleisten, weist der patronenartige Filtereinsatz 9 unten zwei fluegelartige Vorspruenge 14 auf, die diametral entgegengesetzt in einer vertikalen Ebene 14a (Fig. 4) erhalten sind, die rechtwinklig in bezug auf die die mittlere Achse 13b der Oeffnung 13 enthaltende vertikale Ebene 13a (Fig. 3) liegt. Auf der Unterseite der Filtrierungskammer 8 sind deshalb zwei diametral entgegengesetzte Sitze 15 vorgesehen, die faehig sind, die genannten fluegelartigen Vorspruenge 14 des Filtereinsatzes 9 aufzunehmen. Die erwaehnten fluegelartigen Vorspruenge 14 sind vorzugsweise einstueckig auf einem Ring bzw. Kragen 16 erhalten, der mit der Unterseite des Filtereinsatzes 9 verbunden ist. Dieser Ring kann z. B. aus Metall bestehen und mit dem Filtereinsatz 9 durch Schrumpf- bzw. Presspassung, loeten oder dergleichen verbunden sein oder koennte dieser Ring aus Kunststoff bestehen und mit dem Filtereinsatz 9 direkt geformt bzw. mit demselben geklebt sein. Der Filtereinsatz 9 und der genannten Ring 16 koennen auch einstueckig ausgefuehrt werden.

Zweckmaessigerweise nimmt die Filtrierungskammer 8 wenigstens die vollstaendige innere Lichtweite fuer den Durchtritt des Stroemungsmittels ein, wobei im dargestellten Beispiel erstreckt sich vorteilhafterweise die Filtrierungskammer leicht unterhalb der genannten inneren Lichtweite.

Die in Form von zwei fluegelartigen Vorspruengen 14 und von zwei Sitzen 15 dargestellten Positionierungsmittel des Filtereinsatzes 9 in der Filtrierungskammer 8 koennen selbstverstaendlich auch mit nach Belieben verschiedener Anzahl und Gestaltung derselben vorgesehen werden.

Wie der Zeichnung leicht entnahmbar, besteht der Unterschied der in den Figuren 1 und 5 dargestellten Ventile 1 einfach in der Anordnung der Filtrierungskammer 8 vor (Fig. 1) und nach (Fig. 5) dem Verschlusskoerper 6 in bezug auf die mit F angegebenen Stroemungsmittelrichtung. Diese beiden Moeglichkeiten erlauben es jeder beliebigen Einbauerfordernis zu genuegen.

In Fig. 1 ist das Ventil 1 z. B. fuer die Montage in der Leitung nach der Eingangszaehler vorgesehen. Auf diese Weise nach vorherigem Schliessen des Haupteingangsventils ist es moeglich, die Saeuberung des Filtereinsatzes bzw. der Filtrierungskammer durchzufuehren, und zwar mit Verschlusskoerper 6 in der Schliessstellung. Auf diese Weise wird es vermieden, dass die nachgeschaltete Anlage durch die offene Filtrierungskammer 8 entleert wird. Will man dagegen die nachgeschaltete Anlage entleeren, so ist dies einfach indem durchgefuehrbar, dass man den Verschlusskoerper 6 in der Oeffnungsstellung laesst und die Gewindekappe 11 abnimmt. Beim Entfernen der Gewindekappe 11 aus der Filtrierungskammer 8 gleitet der Filtereinsatz 9 selbsttaetig aus der Filtrierungskammer 8 heraus. Mit dem nach dem Eingangszaehler bzw. in jeder beliebigen Stelle der Verteilungsanlage eingebautem Ventil, wie in Fig. 5 dargestellt, erfolgt die Saeuberung des Filtereinsatzes bzw. der Kammer 8 desselben, nach vorheriger Schliessung des Verschlusskoerpers 6. Um eine Entleerung der nachgeschalteten Anlage zu vermeiden, wird es dann erforderlich sein, dem Ventil 1 ein mit gestrichelter Linie dargestelltes Rueckschlagventil 17 zuzuordnen.

Erfindungsgemaess wird es ferner vorgeschlagen, dass der erfindungsgemaesse Filtereinsatz, d. h. der eine seitliche Einlassoeffnung 13 zum Eintritt des zu filtrierenden Stroemungsmittels aufweisende Filtereinsatz ebenfalls in einem T-Filtrierungsverbindungsstueck aufgenommen werden kann, das somit ein Filtrierungsverbindungsstueck darstellt und es ermoeglicht, die Nachteile und Unzulaenglichkeiten der bekannten Filtrierungsverbindungsstuecke zu vermeiden. Ein solches erfindungsgemaesses Filtrierungsverbindungsstueck ist aus den Figuren 6 und 7 ersichtlich, bei welchen die fuer die vorherigen Beispiele verwandten Bezugszeichen verwendet werden. Auch bei diesen Filtrierungsverbindungsstuecken wird die vollstaendige inneren Lichtweite des Verbindungsstuecks verwandt, wodurch Lastverluste im wesentlichen vermieden werden. Die Verarbeitung eines solchen Filtrierungsverbindungsstuecks ist aeusserst vereinfacht und in der Praxis auf eine vollkommen automatisierte Weise durchfuehrbar.

Aus der strukturellen und funktionellen Beschreibung der erfindungsgemaessen Kugelventile und Filtrierungsverbindungsstuecke mit eingebautem Filtereinsatz ist es ersichtlich, das mit diesen Ventilen bzw. Filtrierungsverbindungsstuecken die vorliegender Erfindung zugrunde gelegte Aufgabe wirksam geloest wird und die im Einleitungsteil erwaehnten sowohl funktionellen als auch baulichen Vorteile erzielt werden.

**Patentansprüche**

1. Kugelventil fuer Verteilungsanlagen zur Verteilung von Stroemungsmedien, z. B. Wasser oder Gas, bei dem
im Ventilkoerper (2) zwischen einem Anschlußstueck (3; 4) und der den Verschlußkoerper (6) aufnehmenden Kammer (5) eine im wesentlichen zylinderfoermige und einen patronenartigen Filtereinsatz (9) aufnehmende Filtrierungskammer (8) erhalten ist,
die Filtrierungskammer (8) eine zur axialen Achse (2a) des Ventilkoerpers (2) senkrechte Achse (8a) aufweist, mit einem als Gewindekappe (11) ausgefuehrten loesbaren Kammerboden (11) versehen ist und sich unterhalb der Durchgangslichtweite des Stroemungsmittels erstreckt,
der Filtereinsatz (9) in seiner Umfangsflaeche eine Einlaßoeffnung (13) fuer den Eintritt des Stroemungsmittels aufweist, und
Positionierungsmittel zur Positionierung des Filtereinsatzes (9) in der Filtrierungskammer (8) vorgesehen sind,
**dadurch gekennzeichnet,** dass die Positionierungsmittel (14,15) fuer den Filtereinsatz (9) in der Filtrierungskammer (8) aus zwei diametral entgegengesetzten fluegelartigen Vorsprungen (14), die auf der Unterseite des Filtereinsatzes (9) in einer vertikalen Ebene (14a) vorgesehen sind, die in bezug auf die die Achse (13b) der genannten Einlaßoeffnung (13) im Filtereinsatz (9) enthaltende vertikale Ebene (13a) rechtwinklig liegt, sowie aus zwei entsprechend diametral entgegengesetzt angeordneten und in der Unterseite der genannten Filtrierungskammer (8) erhaltenen Sitzen (15) bestehen.

2. Verbindungsstueck mit eingebautem Filtereinsatz, bei dem
in dem im wesentlichen geradlinigen und das Stroemungsmittel fuehrenden Verbindungsstueckkoeper (2) zwischen den endseitigen Anschlußstuecken (3; 4) eine mittlere im wesentlichen zylinderfoermige und einen patronenartigen Filtereinsatz (9) aufnehmenden Filtrierungskammer (8) erhalten ist, deren Achse (8a) rechtwinklig in bezug auf die Achse (2a) des Verbindungsstueckkoerpers (2) liegt, wobei die Filtrierungskammer (8) sich unterhalb der Durchgangslichtweite des Stroemungsmittels erstreckt, und einen unteren Verschluß (11) aufweist,

der Filtereinsatz (9) in seiner Umfangsflaeche eine Einlaßoeffnung (13) fuer das Stroemungsmittel aufweist, und

Positionierungsmittel zur Positionierung des Filtereinsatz (9) in der Filtrierungskammer (8) vorgesehen sind,

**dadurch gekennzeichnet,** dass die Positionierungsmittel (14, 15) zur Positionierung des Filtereinsatzes (9) in die Filtrierungskammer (8) aus zwei fluegelartigen Vorspruengen (14), die diametral entgegengesetzt in der Unterseite des Filtereinsatzes (9) in einer vertikalen Ebene (14a) vorgesehen sind, die in bezug auf die die Achse (13b) der genannten Einlaßoeffnung (13) des Stroemungsmittels im Filtereinsatz (9) enthaltende vertikale Ebene (13a) rechtwinklig liegt, sowie aus zwei Sitzen (13) bestehen, die in der Unterseite der genannten Filtrierungskammer (8) entsprechend diametral entgegengesetzt vorgesehen sind.

3. Kugelventil nach Anspruch 1 oder 2, **dadurch gekennzeichnet,** dass die fluegelartigen Vorspruenge (14) des Filtereinsatzes (9) in einem Ring oder Kragen (16) erhalten sind, der mit der Unterseite des Filtereinsatzes (9) befestigt ist.

## Claims

1. Ball valve for distribution systems for the distribution of flow media, for example water or gas, in which there is accommodated in the valve body (2), between a connection piece (3;4) and the chamber (5) receiving the shutter body (6), an essentially cylindrical filtration chamber (8) receiving a cartridge-like filter insert (9), the filtration chamber (8) has an axis (8a) perpendicular to the axial axis (2a) of the valve body (2), is equipped with a releasable chamber bottom (11) designed as a threaded cap (11) and extends underneath the clear passage width of the flow medium, the filter insert (9) has in its circumferential face an inlet orifice (13) for the inflow of the flow medium, and positioning means for positioning the filter insert (9) in the filtration chamber (8) are provided, characterised in that the positioning means (14, 15) for the filter insert (9) in the filtration chamber (8) consist of two diametrically opposed wing-like projections (14) which are provided on the underside of the filter insert (9) in a vertical plane (14a) lying at right angles to the vertical plane (13a) containing the axis (13b) of said inlet orifice (13) in the filter insert (9), and of two seats (15) arranged correspondingly diametrically opposite one another and obtained in the underside of said filtration chamber (8).

2. Junction piece with an integrated filter insert, in which there is accommodated in the essentially rectilinear junction-piece body (2) carrying the flow medium, between the end connection pieces (3;4), a central essentially cylindrical filtration chamber (8) which receives a cartridge-like filter insert (9) and the axis (8a) of which is at right angles to the axis (2a) of the junction-piece body (2), the filtration chamber (8) extending underneath the clear passage width of the flow medium and having a lower closure (11), the filter insert (9) has in its circumferential face an inlet orifice (13) for the flow medium, and positioning means for positioning the filter insert (9) in the filtration chamber (8) are provided, characterised in that the positioning means (14, 15) for positioning the filter insert (9) in the filtration chamber (8) consist of two wing-like projections (14) which are provided diametrically opposite one another in the underside of the filter insert (9) in a vertical plane (14a) lying at right angles to the vertical plane (13a) containing the axis (13b) of said inlet orifice (13) of the flow medium in the filter insert (9), and of two seats (13) which are provided correspondingly diametrically opposite one another in the underside of said filtration chamber (8).

3. Ball valve according to Claim 1 or 2, characterised in that the wing-like projections (14) of the filter insert (9) are obtained in a ring or collar (16) which is fastened to the underside of the filter insert (9).

## Revendications

1. Soupape à bille pour des installations de distribution pour la distribution de fluides, par exemple de l'eau ou de gaz, dans lequel est réalisée dans le corps de soupape 2, entre une pièce de raccord (3;4) et la chambre (5) recevant le corps de fermeture (6), une chambre de filtrage (8) sensiblement cylindrique et recevant un insert de filtrage en forme de cartouche (9),

la chambre de filtrage (8) possède un axe (8a) perpendiculaire à l'axe axial (2a) du corps de soupape (2), et est pourvue d'un fond de chambre (11) amovible réalisé sous la forme d'un capuchon fileté (11), et s'étend en-dessous du diamètre intérieur de passage du fluide,

l'insert de filtrage (9) présente dans sa face de pourtour une ouverture d'admission (13) pour l'entrée du fluide, et

sont prévus des moyens de positionnement pour positionner l'insert de filtrage (9) dans la chambre de filtrage (8);

caractérisé en ce que les moyens de positionnement (14; 15) pour l'insert de filtrage (9) sont constitués dans la chambre de filtrage (8) de deux saillies (14) en forme d'aile diamétralement opposées qui sont prévues sur la face inférieure de l'insert de filtrage (9) dans un plan vertical (14a) qui est perpendiculaire au plan vertical (13a) contenant l'axe (13b) de ladite ouverture d'admission (13) dans l'insert de filtrage (9), ainsi que de deux sièges (15) disposés de façon correspondante, diamétralement opposées, et réalisés dans la face inférieure de ladite chambre de filtrage (8).

2. Pièce de raccord avec insert de filtrage intégré dans lequel, dans le corps formant pièce de raccord (2) sensiblement rectiligne et conduisant le fluide, entre les pièces de raccord (3; 4) prévues côté extrémité, une chambre de filtrage médiane (8) sensiblement cylindrique et recevant un insert de filtrage en forme de cartouche (9), dont l'axe (8a) est perpendiculaire à l'axe (2a) du corps formant pièce de raccord (2), la chambre de filtrage 8 s'étendant en-dessous de la largeur intérieure de passage du fluide, et possède une fermeture inférieure (11), l'insert de filtrage (9) possède dans sa face de pourtour une ouverture d'admission (13) pour le fluide, et des moyens de positionnement sont prévus pour positionner l'insert de filtrage (9) dans la chambre de filtrage (8), caractérisée en ce que les moyens de positionnement (14; 15) pour positionner l'insert de filtrage (9) dans la chambre de filtrage (8), sont constitués de deux saillies (14) en forme d'aile prévues de façon diamétralement opposées dans le côté inférieur de l'insert de filtrage (9) dans un plan vertical (14a) qui est perpendiculaire par rapport au plan vertical (13a) contenant l'axe (13b) de ladite ouverture d'admission (13) du fluide dans l'insert de filtrage (9) ainsi que de deux sièges (13) qui sont prévus dans la face inférieure de ladite chambre de filtrage (8) de façon correspondante, diamétralement opposée.

3. Soupape à bille selon la revendication 1 ou 2, caractérisée en ce que les saillies en forme d'aile (14) de l'insert de filtrage (9) sont réalisées dans un anneau ou collet (16) qui est fixé au côté inférieur de l'insert de filtrage (9).

FIG. 1

FIG. 2

FIG. 3

FIG. 4

FIG. 5

FIG. 6

FIG. 7